# EUROPEAN PATENT APPLICATION

(11) **EP 2 367 030 A2**
(43) Date of publication of application: **21.09.2011**
(21) Application number: 10252069.9
(22) Date of filing: 07.12.2010
(51) Int. Cl.: G02B 1/04, B29D 11/00, G02B 6/00

(54) **Methacrylic resin composition for extruded light guide panel and light guide panel made thereof**

(30) Priority: 08.12.2009 JP 2009278281; 20.08.2010 JP 2010184718
(71) Applicant: Sumitomo Chemical Company, Limited, Tokyo 104-8260 (JP)
(72) Inventor: Sumida, Masakazu, Niihama-shi, Ehime (JP); Yamazaki, Kazuhiro, Saijo-shi, Ehime (JP); Wake, Takao, Saijo-shi, Ehime (JP)
(74) Representative: Duckworth, Timothy John

(57) **Abstract**

A methacrylic resin composition is provided which is suitable for producing an extruded light guide panel that has sufficient heat resistance. The methacrylic resin composition of the present invention is a methacrylic resin composition for an extruded light guide panel, which is characterized in that a copolymer of methyl methacrylate and an acrylic acid ester is contained, and a ratio of methyl methacrylate unit in the copolymer which ratio is determined by an analysis with pyrolysis gas chromatography is 96% by weight or more, and a reduced viscosity determined at 25 °C as a chloroform solution of the composition with a concentration of 0.01 g/cm³ is from 60 cm³/g to 80 cm³/g.

## Description

### TECHNICAL FIELD

The present invention is related to a methacrylic resin composition which is used for producing a light guide panel which constitutes a backlight for a liquid crystal display equipped with, for example, an LED light source by extrusion.

### BACKGROUND OF THE INVENTION

A light guide panel is known as an optical member which guides a light from a light source placed on a side of the panel to a liquid crystal display surface in a liquid crystal display used in, for example, a liquid crystal television, a notebook-sized personal computer, a desk-top type personal computer, a cell phone and a digital camera. It is known that the light guide panel is generally produced by cast-polymerizing a polymerizable material of which main component is methyl methacrylate to give a cast plate, and then cutting the edge portions of the plate (for example, see Patent Literature 1). This cast polymerization, however, does not enable a loss material (i.e. chips) produced by the cutting process to be reused. Therefore, there is a demand for an extrusion method as a production method of the light guide panel, which method enables the loss to be reused. As such a method for extruding a methacrylic resin composition containing a copolymer of methyl methacrylate of 95 parts by weight and an acrylic acid ester of 5 parts by weight has been suggested (see Patent Literatures 2 and 3).

### RELATED TECHNICAL LITERATURE

### PATENT LITERATURE

Patent Literature 1: JP 2004-144813 A
Patent Literature 2: WO 2006/054509
Patent Literature 3: WO 2006/046638

### SUMMARY OF THE INVENTION

Recently, the use of an LED (light emission diode) array as the light source for the liquid crystal display has been studied. When the LED light source is used, a temperature inside the display is increased because of heat generation of the LED, to subject the light guide panel to a high temperature for a long period of time. For this reason, heat resistance is required of the light guide panel. However, the extruded light guide panel produced by the conventional extrusion method as described above is not always satisfactory in the heat resistance and the methacrylic resin composition is not always satisfactory as a material for the extruded light guide panel. An object of the present invention is to provide a methacrylic resin composition which is suitable for producing a light guide panel which is satisfactory in heat resistance.

The present inventors intensively studied in order to solve the above problem and completed the present invention.

The present invention is to provide a methacrylic resin composition for an extruded light guide panel, which is characterized by satisfying the following (I), (II) and (III) :
(I) The composition includes a copolymer of methyl methacrylate and an acrylic acid ester;
(II) The ratio of methyl methacrylate unit in the copolymer which ratio is determined by an analysis with pyrolysis gas chromatography is 96% by weight or more;
(III) A reduced viscosity as determined at 25 °C as a chloroform solution of the composition with a concentration of 0.01 g/cm³ is from 60 cm³/g to 80 cm³/g.

### EFFECT OF INVENTION

According to the present invention, the methacrylic resin composition which is suitable for producing the extruded light guide panel having satisfactory heat resistance can be provided. Further, the methacrylic resin composition is suitable as a material for extrusion and makes it possible to produce the light guide panel with good productivity by reusing the loss (i.e. chips) which is caused during the cutting process as the material for extrusion again.

### BRIEF DESCRIPTION OF THE DRAWINGS

Fig. 1 is a schematic diagram showing an example of a method for producing an extruded resin plate by extruding a methacrylic resin composition in a heated and molten state from a die.
Fig. 2 is a schematic diagram showing another example of a method for producing an extruded resin plate by extruding a methacrylic resin composition in a heated and molten state from a die.

### DETAILED DESCRIPTION OF THE EMBODIMENTS

The methacrylic resin composition of the present invention contains a copolymer of methyl methacrylate and an acrylic acid ester (the above (I)). Monomeric components for forming the above copolymer contain methyl methacrylate (a) and an acrylic acid ester (b) as essential components, and may contain, in addition to these monomeric components, a monomer (c) which is copolymerizable with methyl methacrylate or the acrylic acid ester.

As the acrylic acid ester (b), an acrylic acid ester which-can reduce a glass transition temperature of a resultant copolymer is exemplified. Specifically, the acrylic acid esters (b) include methyl acrylate, ethyl acrylate, propyl acrylate, n-butyl acrylate, sec-butyl acrylate, tert-butyl acrylate, cyclohexyl acrylate, benzyl acrylate, 2-ethyl hexyl acrylate, 2-hydroxyethyl acrylate, and cyclopentadienyl acrylate and so on. Among them, methyl acrylate and ethyl acrylate are preferable, and methyl acrylate is more preferable. One kind of the acrylic acid ester (b) may be used or two or more kinds of the acrylic acid esters (b) may be used.

The monomer (c) copolymerizable with methyl methacrylate or the acrylic acid ester is not particularly limited. For example, as the monomer (c), a monofunctional monomer having one double bond which is radical-polymerizable or a multifunctional monomer having two or more double bonds which are radical-polymerizable can be listed. Specifically, monofunctional monomers having one double bond which is radical-polymerizable include, for example, methacrylic acid esters such as ethyl methacrylate, propyl methacrylate, n-butyl methacrylate, sec-butyl methacrylate, tert-butyl methacrylate, 2-ethyl hexyl methacrylate, cyclohexyl methacrylate, benzyl methacrylate, cyclopentadienyl methacrylate and so on; unsaturated carboxylic acids or anhydrides thereof such as acrylic acid, methacrylic acid, maleic acid, itaconic acid, maleic acid anhydride and itaconic acid anhydride and so on; a nitrogen-containing monomer such as acrylamide, methacrylamide, acrylonitrile, methacrylonitrile and so on; styrene-based monomers such as styrene, and α-methyl styrene and so on. The multifunctional monomers having two or more double bonds which are radical-polymerizable include diesters of unsaturated carboxylic acids and glycols such as ethylene glycol dimethacrylate, and butane diol dimethacrylate; unsaturated carboxylic acid alkenyl esters such as allyl acrylate, allyl methacrylate, and allyl cinnamic acid; polybasic acid polyalkenyl esters such as diallyl phthalic acid, diallyl maleic acid, triallyl cyanurate, and triallyl isocyanurate; esters of unsaturated carboxylic acid and polyalcohol such as trimethylolpropane triacrylate; and divinylbenzene. One kind of the monomer (c) may be used, or two or more kinds of the monomers (c) may be used.

A polymerization method for polymerizing the above-described monomeric components is not particularly limited. The known methods such as a bulk polymerization, a solution polymerization and a suspension polymerization may be employed. Among them, the bulk polymerization and the solution polymerization are preferable. The bulk polymerization is preferably, for example, a continuous bulk polymerization wherein the monomeric components and a polymerization initiator are continuously fed into a reaction vessel, while a partial polymer which is obtained by residence of the components for a predetermined time in the reaction vessel is continuously discharged. The solution polymerization is preferably, for example, a continuous solution polymerization wherein the monomeric components, a solvent and the polymerization initiator are continuously fed to a reaction vessel, while a partial polymer which is obtained by residence of the components for a predetermined time in the reaction vessel is continuously discharged. Both of the continuous bulk polymerization and the continuous solution polymerization make it possible to product the polymer with high productivity.

The polymerization initiator is not particularly limited. The polymerization initiators include azo compounds such as azobisisobutyronitrile, azobisdimethylvaleronitril, azobiscyclohexanenitrile, 1,1'-azobis(1-acetoxy-1-phenylethane), dimethyl 2,2'-azobis iso butylate, 4,4'-azobis-4-cyanovaleric acid and so on; organic peroxides such as benzoyl peroxide, lauroyl peroxide, acetyl peroxide, caprylyl peroxide, 2,4-dichlorbenzoyl peroxide, isobutyl peroxide, acetylcyclohexyl sulphonyl peroxide, t-butyl peroxypivalate, t-butyl peroxyneodecanoate, t-butyl peroxyneoheptanoate, t-butyl peroxy-2-ethylhexanoate, 1,1-di(t-butylperoxy)cyclohexane, 1,1-di(t-butylperoxy)-3,3,5-trimethylcyclohexane, 1,1-di(t-hexylperoxy)-3,3,5-trimethylcyclohexane, isopropyl peroxydicarbonate, isobutyl peroxydicarbonate, s-butyl peroxydicarbonate, n-butyl peroxydicarbonate, 2-ethylhexyl peroxydicarbonate, bis(4-t-butylcyclohexyl)peroxydicarbonate, t-amyl peroxy-2-ethylhexanoate, 1, 1, 3, 3-tetramethylbutyl peroxy-2-ethylhexanoate, 1,1,2-trimethylpropyl peroxy-2-ethylhexanoate, t-butyl peroxyisopropyl monocarbonate, t-amyl isopropyl monoperoxycarbonate, t-butyl-2-ethylhexyl peroxycarbonate, t-butyl peroxyallylcarbonate, t-butyl peroxyisopropylcarbonate, 1,1,3,3-tetramethylbutyl peroxyisopropyl monocarbonate, 1,1,2-trimethylpropyl peroxy isopropyl monocarbonate, 1,1,3,3-tetramethyl butyl peroxy isononanoate, 1,1,2-trimethylpropyl peroxy isononanoate, t-butyl peroxybenzoate and so on. One kind of the polymerization initiator may be used, or two or more kinds of the polymerization initiators may be used.

A chain transfer agent may be used upon the polymerization of the monomeric components, if necessary. The chain transfer agent is not particularly limited. Mercaptans such as n-propyl mercaptan, isopropyl mercaptan, n-butyl mercaptan, t-butyl mercaptan, n-hexyl mercaptan, n-octyl mercaptan, n-dodecyl mercaptan, t-dodecyl mercaptan, 2-ethylhexyl thioglycolate, phenyl mercaptan, thiocresol, ethylene thioglycol and so on are preferably exemplified. One kind of the chain transfer agent may be used, or two or more kinds of the chain transfer agent may be used.

A polymerization temperature at which the above monomeric components are copolymerized is optimally adjusted depending on a type and an amount of the radical polymerization initiator used, and generally from 100 °C to 200 °C and preferably from 120 °C to 180 °C. When the polymerization temperature is too high, syndiotacticity of the resultant copolymer is low and therefore there is possibility that the obtained extruded product (the light guide panel) may not have the heat resistance sufficient to maintain the shape thereof.

The methacrylic resin composition of the present invention is one wherein the ratio of the methyl methacrylate unit in the copolymer which ratio is determined by an analysis with pyrolysis gas chromatography is 96% by weight (the above (II)). Therefore, the ratios of methyl methacrylate unit and the acrylic acid ester unit in the copolymer are optimally adjusted so as to meet this requirement. Specifically, the contents of methyl methacrylate (a) and the acrylic acid ester (b) in the monomeric components are optimally adjusted.

The content of methyl methacrylate (a) in the monomeric components is generally 96% by weight or more, preferably from 96% to 99.9% by weight, more preferably from 96% to 99.5% by weight, still more preferably 96% to 99.0% by weight relative to a total amount of the monomeric components. The content of the acrylic acid ester (b) in the monomeric components is generally 4% by weight or less, preferably from 0.1% to 4% by weight, more preferably 0.5% to 4% by weight and still more preferably from 1.0% to 4% by weight relative to the total amount of the monomeric components. When the amount of the acrylic acid ester (b) is more than 4% by weight relative to the total amount of the monomeric components, the heat resistance of the obtained extruded product (the light guide panel) cannot be improved sufficiently. When the amount of the acrylic acid ester (b) is less than 0.1% by weight, there is concern that a cracked gas tends to be produced during the extrusion.

An analysis method known as an analysis method using the pyrolysis gas chromatography may be employed. For example, the analysis may be carried out by subjecting the methacrylic resin composition of the present invention to pyrolysis in a pyrolytic furnace at a predetermined temperature (400 °C or more); analyzing the cracked gas by gas chromatography; determining area ratios of peaks corresponding to the monomeric components of the copolymer; and then converting the area ratios to the weight ratios. In the method for converting the area ratio to the weight ratio, a factor which converts the area ratio to the weight ratio may be calculated by determining the area ratio for a control of a methacrylic resin for which the types and the contents of the monomeric components are already known, or the factor is calculated by determining a calibration curve using a plurality of controls if necessary. When the peaks are overlapped partially, the ratio is calculated correcting the overlapped area.

The methacrylic resin composition of the present invention is one wherein the ratio of methyl methacrylate unit in the copolymer which ratio is determined by the analysis with pyrolysis gas chromatography is 96% by weight or more, preferably from 96% to 99.9% by weight, more preferably from 96% to 99.5% by weight and still more preferably 96% to 99.0% by weight. On the other hand, when methyl acrylate is used as the acrylic acid ester, the ratio of methyl acrylate in the copolymer which ratio is determined by the analysis with pyrolysis gas chromatography is generally 4% by weight or less, preferably from 0.1% to 4% by weight, more preferably 0.5% to 4% by weight and still more preferably from 1.0% to 4% by weight.

The methacrylic resin composition of the present invention shows a reduced viscosity, when determined at 25 °C by solving the composition in chloroform at a concentration of 0.01 g/cm³, is from 60 cm³/g to 80 cm³/g (the above (III)). The reduced viscosity is preferably from 63 cm³/g to 78 cm³/g, more preferably 65 cm³/g to 75 cm³/g. When the reduced viscosity is less than 60 cm³/g, the heat resistance of the obtained extruded product (the light guide panel) cannot be improved sufficiently. On the other hand, when the reduced viscosity is greater than 80 cm³/g, flowability of the resin composition is reduced, and therefore the composition is difficult to be extruded unless an extrusion temperature is increased, which leads to problems of coloring of the obtained light guide panel and burned spots in the obtained light guide panel. The amount of the chain transfer agent used when polymerizing the monomeric components is adjusted in order that the reduced viscosity is in the above range. Specifically, when the amount of the chain transfer agent is increased, the reduced viscosity can be decreased.

The flowability is evaluated by an MFR (Melt Flow Rate) determined at 230 °C under a load of 37.3 N. The MFR is generally from 0.5 g/10min to 7 g/10min, preferably 1 g/10min to 6 g/10min, and more preferably 1.8 g/10min to 5 g/10min. When the MFR is too high, the methacrylic resin composition becomes too soft upon the extrusion and therefore the light guide panel having a uniform thickness is difficult to be obtained. When the MFR is too low, the flowability of the methacrylic resin composition is reduced and therefore the composition is difficult to be extruded unless an extrusion temperature is increased, which leads to problems of coloring of the obtained light guide panel and burned spots in the obtained light guide panel. The MFR depends on the reduced viscosity, the composition of the monomeric components (the ratios of the acrylic acid ester and the multifunctional monomer) and the polymerization temperature when polymerizing the monomeric components. In order that the MFR is in the above range, for example, the reduced viscosity and the composition of the monomeric components at the predetermined polymerization temperature may be adjusted. Specifically, the MFR can be increased when the reduced viscosity is set low at the predetermined polymerization temperature, or the content of the acrylic acid ester is increased in the monomeric components, or the content of the multifunctional monomer in the monomeric components is increased.

The methacrylic resin composition of the present invention preferably contains, in addition to the copolymer, a release agent in an amount of 0.01% to 0.1% by weight relative to the total amount of the methacrylic resin composition. The content of the release agent is preferably from 0.01% to 0.08% by weight, and more preferably from 0.01% to 0.05% by weight relative to the total amount of the methacrylic resin composition. When the content of the release agent is less than 0.01% by weight, the resin may be attached to a roll upon the extrusion resulting in failure in well extrusion. When the content of the release agent is more than 0.1% by weight, smoke may be emitted during the extrusion, which brings concern that a yield may be reduced due to grime on the roll.

The release agent is not particularly limited. Specifically, esters of higher fatty acids, higher fatty alcohols, higher fatty acids, higher fatty acid amides, metal salts of higher fatty acids and so on are exemplified. As the mold release agent, one kind or more than one kind thereof may be used.

As the above-described ester of higher fatty acid, more specifically, examples are saturated fatty acid alkyl ester such as methyl laurate, ethyl laurate, propyl laurate, butyl laurate, octyl laurate, methyl palmitate, ethyl palmitate, propyl palmitate, butyl palmitate, octyl palmitate, methyl stearate, ethyl stearate, propyl stearate, butyl stearate, octyl stearate, stearyl stearate, myristyl myristate, methyl behenate, ethyl behenate, propyl behenate, butyl behenate, octyl behenate; unsaturated fatty acid alkyl ester such as methyl oleate, ethyl oleate, propyl oleate, butyl oleate, octyl oleate, methyl linoleate, ethyl linoleate, propyl linoleate, butyl linoleate, octyl linoleate; saturated fatty acid glyceride such as lauric monoglyceride, lauric diglyceride, lauric triglyceride, palmitic monoglyceride, palmitic diglyceride, palmitic triglyceride, stearic monoglyceride, stearic diglyceride, stearic triglyceride, behenic monoglyceride, behenic diglyceride, behenic triglyceride; unsaturated fatty acid glyceride such as oleic monoglyceride, oleic diglyceride, oleic triglyceride, linolic monoglyceride, linolic diglyceride, linolic triglyceride; and so on. Among them, methyl stearate, ethyl stearate, butyl stearate, octyl stearate, stearic monoglyceride, stearic diglyceride, stearic triglyceride, and the like are preferred.

As the above-described higher fatty alcohol, more specifically, examples are saturated fatty (or aliphatic) alcohol such as lauryl alcohol, palmityl alcohol, stearyl alcohol, isostearyl alcohol, behenyl alcohol, myristyl alcohol, cetyl alcohol; unsaturated fatty (or aliphatic) alcohol such as oleyl alcohol, linolyl alcohol; and so on. Among them, stearyl alcohol is preferred.

As the above-described higher fatty acid, more specifically, examples are saturated fatty acid such as caproic acid, caprylic acid, capric acid, lauric acid, myristic acid, palmitic acid, stearic acid, arachidic acid, behenic acid, lignoceric acid, 12-hydroxyoctadecanoic acid; unsaturated fatty acid such as palmitoleic acid, oleic acid, linoleic acid, linolenic acid, cetoleic acid, erucic acid, ricinoleic acid; and so on.

As the above-described higher fatty acid amide, more specifically, examples are saturated fatty acid amide such as lauric acid amide, palmitic acid amide, stearic acid amide, behenic acid amide; unsaturated fatty acid amide such as oleic acid amide, linoleic acid amide, erucic acid amide; amides such as ethylene-bis-lauric acid amide, ethylene-bis-palmitic acid amide, ethylene-bis-stearic acid amide, N-oleyl stearamide; and so on. Among them, stearic acid amide and ethylene-bis-stearic acid amide are preferred.

As the above-described metal salt of higher fatty acid, examples are sodium salt, potassium salt, calcium salt and barium salt of the above-described higher fatty acid, and so on.

As the release agent, stearyl alcohol is most preferable among them.

The methacrylic resin composition preferably contains, in addition to the copolymer, a thermal stabilizing agent for suppressing thermal decomposition of the copolymer. More preferably, the content of the thermal stabilizing agent is from 1 ppm to 2000 ppm by weight relative to the total amount of the methacrylic resin composition. When the methacrylic resin composition of the present invention is subjected to extrusion so as to form it into a light guide panel as desired, an extrusion temperature is set at a higher temperature for the purpose of increasing extrusion efficiency in some cases, and addition of the thermal stabilizing agent in these cases is more effective.

The thermal stabilizing agent is not particularly limited. A phosphorous-based thermal stabilizing agent and an organic disulfide compound are exemplified as the thermal stabilizing agent. Among them, the organic disulfide compound is preferable. One kind of the thermal stabilizing agent may be used, or two or more kinds of thermal stabilizing agents may be used.

As the above-described phosphorus-based thermal stabilizing agent, examples are tris(2,4-di-t-butylphenyl)phosphite, 2-[[2,4,8,10-tetrakis(1,1-dimethylethyl)dibenzo [d,f][1,3,2]dioxaphosphepine-6-yl]oxy]-N,N-bis[2-[[2,4,8,10-tetrakis(1,1-dimethylethyl)dibenzo [d,f][1,3,2]dioxaphosphepine-6-yl]oxy]-ethyl]ethanamine, diphenyl tridecyl phosphite, triphenyl phosphite, 2,2-methylenebis(4,6-di-tert-butylphenyl)octylphosphite, bis(2,6-di-tert-butyl-4-methylphenyl)pentaerythritol diphosphite, and so on. Among them, 2,2-methylenebis(4,6-di-tert-butylphenyl)octylphosphite is preferred.

As the above-described organic disulfide compound, examples are dimethyl disulfide, diethyl disulfide, di-n-propyl disulfide, di-n-butyl disulfide, di-sec-butyl disulfide, di-tert-butyl disulfide, di-tert-amyl disulfide, dicyclohexyl disulfide, di-tert-octyl disulfide, di-n-dodecyl disulfide, di-tert-dodecyl disulfide, and so on. Among them, di-tert-alkyl disulfide is preferred, and di-tert-dodecyl disulfide is more preferred.

The methacrylic resin composition of the present invention may contain, in addition to the copolymer, the release agent and the thermal stabilizing agent as described above, various additives such as a light diffusing agent, an ultraviolet absorbing agent, an antioxidizing agent, a light stabilizer and so on as long as the present invention does not lose its effects. If an additive(s) is added to the composition, it is preferable to add the additive such that that the content of the copolymer is preferably from 96% to 99.999% by weight relative to the total amount of the methacrylic resin composition.

When the methacrylic resin composition of the present invention contains the above-described release agent, the thermal stabilizing agent, the light diffusing agent or another additive(s) (which are hereinafter collectively referred to as "additives"), the additives may be incorporated in the resin composition by (a) a method wherein the copolymer obtained by polymerizing the monomeric components and the additives are charged and mixed by heat- and melt-kneading in a single-screw extruder or a twin-screw extruder, (b) a method wherein the monomeric components and the additives are mixed followed by being subjected to the polymerization reaction, or (c) a method wherein the additives are made attached to pellets or beads made of the copolymer described in (a) and the mixing and the extrusion of them are carried out at the same time, or the like.

The methacrylic resin composition of the present invention is suitable as a material for extrusion when the above-described requirements (I), (II) and (III) are satisfied. In addition, since the light guide panel produced by extruding the methacrylic resin composition is excellent in heat resistance, the resin composition is suitable as a material for the light guide panel.

The light guide panel of the present invention can be produced by subjecting a resin plate to a cutting process, the resin plate being obtained by extruding the methacrylic resin composition. The employment of the extrusion method makes it possible to reuse the chips produced by the cutting process which chips are to be loss in the prior cast polymerization method. In addition, the extrusion method machines the extruded plated into a desired size more easily compared to the cast polymerization method.

Although the extruder which is used in the extrusion is not particularly limited, a single-screw extruder is preferable from the viewpoints of operability and equipment cost. The conditions (for example, the melting temperature of the materials for the extrusion, the extrusion temperature of the materials for extrusion, and the extrusion pressure and so on) under which the light guide panel of the present invention is produced are not limited particularly, and may be optimally selected.

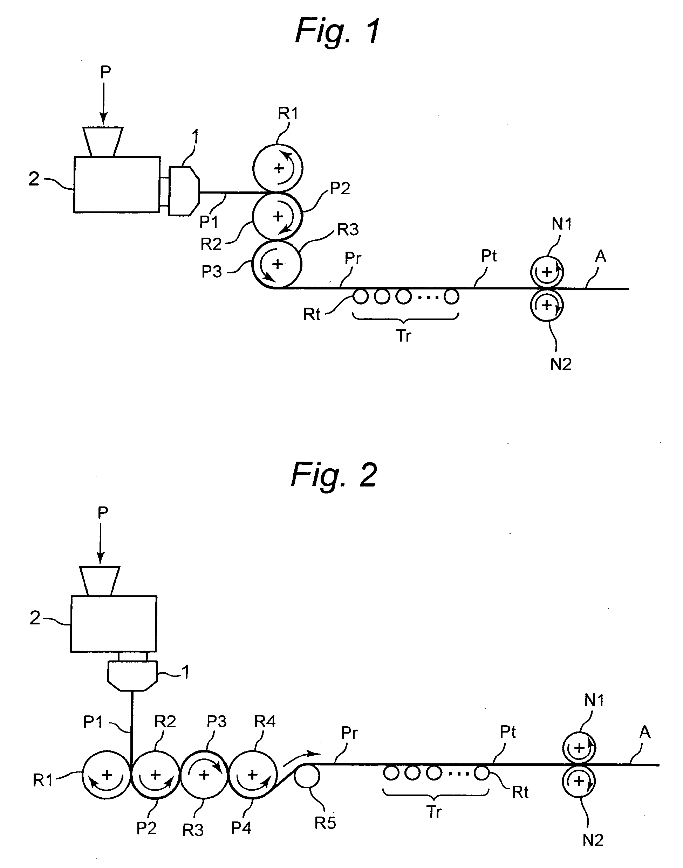

Next, an operation sequence for producing the extruded resin plate wherein the methacrylic resin composition of the present invention is extruded in a heated and molten state from a die is described with reference to Figs. 1 and 2. It should be noted that the present invention is not limited to the methods indicated in Figs. 1 and 2 each of which is a schematic view showing an example of a method for producing the extruded resin plate by extruding the methacrylic resin composition in a heated and molten state from the die.

As shown in Figs. 1 and 2, the methacrylic resin composition (P) is pneumatically conveyed to a die (1) using an extruder (2) while heating and melt-kneading the composition (P), similarly to the conventional extrusion method, in order that the methacrylic resin composition (P) in the heated and molten state is extruded from the die (1). The methacrylic resin composition (P) pneumatically conveyed from the extruder (2) is spread into a plate with its heated and molten state kept, by means of the die (1) and then extruded from the die (1). A T-die is generally used as the die (1).

The methacrylic resin composition (P1) extruded from the die (1) is brought in between a first cooling roll (R1) and a second cooling roll (R2).

The rolls having approximately the same diameter are generally used as the first cooling roll (R1) and the second cooling roll (R2). The first cooling roll (R1) and the second cooling roll (R2) are generally made of a metal material such as a stainless steel and finished by plating to have a mirror surface. The respective temperatures of the first cooling roll (R1) and the second cooling roll (R2) are adjusted so that the methacrylic resin composition (P1) extruded from the die (1) is cooled to a predetermined temperature.

The first cooling roll (R1) and the second cooling roll (R2) are rotatively driven at a predetermined circumferential velocity ratio, by means of, for example, an electric motor (not shown). In this case, the predetermined circumferential velocity ratio is almost one, but it is adjusted depending on the warp and the surface condition in the obtained sheet.

The methacrylic resin composition (P1) brought in between the first cooling roll (R1) and the second cooling roll (R2) is generally wrapped over this second cooling roll (R2), keeping close contact with the second cooling roll (R2).

The methacrylic resin composition (P2) wound on the second cooling roll (R2) is wrapped over one later-stage cooling roll (R3), or a plurality of later-stage rolls (R3, R4, ...) subsequently.

The rolls having almost the same diameter as that of the first cooling roll (R1) and the second cooling roll (R2) are generally used as the latter-stage cooling rolls (R3, R4, ...) of which surfaces are formed of a metal material such as stainless steel and mirror-finished in general. The temperatures of the latter-stage cooling rolls (R3, R4, ...) are adjusted so as to cool the methacrylic resin composition (P1) extruded from the die to a predetermined temperature.

In Fig. 1, an example is shown wherein one latter-stage cooling roll is used alone. In this example, the methacrylic resin composition (P2) wrapped over the second cooling roll (R2) is generally brought in between this second cooling roll (R2) and the latter-stage roll (R3) and then wrapped over this latter-stage roll (R3), keeping close contact with the roll (R3).

One latter-stage roll (R3) is rotatively driven by, for example, an electric motor (not shown).

In Fig. 2, an example is shown wherein a plurality of latter-stage cooling rolls are used. When two or more latter-stage rolls (R3, R4, ...) are used, the number of the rolls is generally around two to four. In Fig. 2, an example is shown wherein two latter-stage cooling rolls (R3, R4) are used.

The methacrylic resin composition (P2) wrapped over the second cooling roll (R2) is generally brought in between this second cooling roll (R2) and a first roll (R3) of the latter-stage cooling rolls and then wrapped over this first roll (R3) followed by being brought in between this roll (R3) and the next cooling roll (R4 ...) and wrapped over the next later-stage cooling roll (R4...) subsequently.

Each of two or more latter-stage cooling rolls (R3, R4, ...) is rotatively driven by, for example, an electric motor (not shown).

In this way, the methacrylic resin composition (Pr) which has been cooled by wrapping the resin composition over one (or single) latter-stage cooling roll (R3) (Fig. 1) or over a plurality of cooling rolls (R3, R4, ...) subsequently (Fig. 2) is in a state where portions near surfaces are solidified and the mirror surfaces of the rolls are transferred to the sheet surfaces and the inside of the sheet is in a softened state where the inside of the sheet is not sufficiently solidified and is capable of thermally deforming. The temperature of the inside of the sheet is preferably not less than a thermal deformation temperature.

Next, this methacrylic resin composition (Pr) is further cooled to be solidified being kept flat, as shown in Figs. 1 and 2. In order that the methacrylic resin composition (Pr) is cooled to be solidified being kept flat, the resin composition may be stood to cool by being conveyed in air on a roller table (Tr) constituted of a plurality of transportation rolls (Rt), similarly to the conventional extrusion method. In Fig. 2, the methacrylic resin composition (Pr) is conveyed to the roller table (Tr) via a guide roll (R5). The cooling of the methacrylic resin (Pr) which was kept in a flat state is preferably conducted in an atmosphere of 35 °C or more, and generally 65 °C or less from the viewpoint that the transportation distance can be shortened, preferably 60 °C or less, more preferably 50 °C or less and particularly preferably 45 °C or less.

The methacrylic resin composition (Pt) which has been solidified is taken-off by a pair of take-off rolls (N1, N2) as shown in Figs. 1 and 2. As the take-off rolls (N1, N2) in a pair, the rolls are generally used of which surfaces are formed of a metal material such as a stainless steel and mirror-finished, or formed of a rubber. The take-off rolls (N1, N2) in a pair are rotatively driven by, for example, an electric motor (not shown) such that the circumference velocities of the rolls are approximately the same. The solidified methacrylic resin composition (Pt) is taken off being brought in between the take-off rolls (N1, N2).

A thickness of the extruded resin plate (A) after the resin composition is taken off by the take-off rolls (N1, N2) is adjusted by, for example, the thickness of the methacrylic resin composition (P1) extruded from the die (1), and a gap between the first cooling roll (R1) and the second cooling roll (R2) and so on.

After taking off the resin by the take-off rolls (N1, N2), masking films are generally attached to the both surfaces of the extruded resin plate (A) and then the resin plate is cut into a desired size. Further, the edge face is optionally polished and one surface is optionally subjected to dot printing or laser processing for making dots so that a reflection pattern is formed. Thus, the light guide panel of the present invention is obtained.

Chips which do not form the product and become loss are produced upon the cutting process. However, the chips can be crashed and then reused as a material for extrusion.

In this way, the light guide panel is produced. A thickness of the light guide panel of the present invention is generally from 0.1 mm to 10 mm, and preferably from 0.3 mm to 5 mm. When the light guide panel of the present invention is used in a liquid crystal display equipped with an LED light source, the thickness of the panel is preferably 1 mm or more. The thickness of the light guide panel can be adjusted by adjusting the thickness of the extruded resin plate (A) in such a manner as described above.

Since the light guide panel of the present invention is excellent in heat resistance, the panel is suitably used in, for example, a backlight for the liquid crystal display equipped with LED light source. The liquid crystal displays equipped with LED light source include a television, a monitor of a personal computer, and a liquid crystal screen of a cell phone or a digital camera. The light guide panel of the present invention is particularly used in the liquid crystal large display with LED light source, such as the television.

### EXAMPLES

The present invention is described in detail by examples, but the present invention is not limited by the examples. The determination and evaluation of properties of the obtained methacrylic resin composition and the obtained extruded resin plate were conducted by the methods described below.

### [Compositional ratio of copolymer]

The obtained pellet-shaped methacrylic resin composition was analyzed by pyrolysis gas chromatography under the conditions indicated below and the respective peak areas corresponding to methyl methacrylate and the acrylic acid ester were determined.

### (Pyrolysis conditions)

Sample preparation: About 2 mg to 3 mg of a methacrylic resin composition was precisely weighed and put into a center portion of a spouted metal cell and the metal cell was folded and the both ends of the cell were pressed with a nipper to enclose the resin composition.
Pyrolyzer: CURIE POINT PYROLYZER JHP-22 (manufactured by Japan Analytical Industry Co., Ltd.)
Metal cell: Pyrofoil F590 (manufactured by Japan Analytical Industry Co., Ltd.)
Temperature set in thermostat bath: 200 °C
Temperature set in heat insulation pipe: 250 °C
Pyrolysis temperature: 590 °C
Pyrolysis time: 5 seconds

### (Gas chromatography analysis conditions)

Gas chromatography analyzer: GC-14B (manufactured by SHIMADZU CORPORATION)
Detection method: FID
Column: 7G 3.2 mm x 3.1 mmϕ (manufactured by SHIMADZU CORPORATION)
Packing material: FAL-M (manufactured by SHIMADZU CORPORATION)
Carrier gas: Air/N₂/H₂=50/100/50(kPa), 80ml/min
Temperature rise conditions in column: Maintaining at 100 °C for 15 minutes - Raising to 150 °C at 10 °C/min Maintaining at 150 °C for 14 minutes
INJ temperature: 200 °C
DET temperature: 200 °C

The methacrylic resin composition was pyrolyzed under the above described pyrolysis conditions, and the resultant pyrolyzed products were detected under the above-described gas chromatography conditions, and a peak area (a₁) corresponding to the detected methyl methacrylate and a peak area (b₁) corresponding to the detected acrylic acid ester were determined. Then, a peak area ratio A (=b₁/a₁) was calculated from these peak areas.

On the other hand, a control methacrylic resin for which the weight ratio (W₀) of the acrylic acid ester unit to the methyl methacrylate unit was already known was pyrolyzed under the above-described pyrolysis conditions. Then, the resultant pyrolyzed products were detected under the above-described gas chromatography conditions and a peak area (a₀) corresponding to the detected methyl methacrylate and a peak area (b₀) corresponding to the detected acrylic acid ester were determined, and the peak area ratio Ao (=b₀/a₀) was calculated from these peak areas. Further, a factor f (=W₀/A₀) was determined from the peak area ratio A₀ and the weight ratio W₀.

The weight ratio W of the acrylic ester unit to the methyl methacrylate unit in the copolymer contained in the methacrylic resin composition was determined by multiplying the peak area ratio A by the factor f. From this weight ratio W, the ratio (% by weight) of the methyl methacrylate unit relative to the total of the methyl methacrylate unit and the acrylic acid ester, and the ratio (% by weight) of the acrylic acid ester unit relative to the total were calculated.

### [Reduced viscosity]

Pursuant to ISO 1628-6, 0.5 g of the obtained pellet-shaped methacrylic resin composition was dissolved in 50 mL of chloroform and the reduced viscosity was determined at 25 °C using Cannon-Fenske viscometer.

### [MFR]

Pursuant to JIS-K7210, an MFR of the obtained pellet-shaped methacrylate resin composition was determined at 230 °C under a load of 37.3 N.

### [Heat resistance (Vicat softening temperature)]

Pursuant to JIS-K7206 (B50 method), a Vicat softening temperature of the obtained extruded resin plate was determined using a heat distortion tester (manufactured by Yasuda Seiki seisakusho LTD., "148-6 series type"). As the Vicat softening temperature is higher, the heat resistance is better.

### [Heat resistance (Heat sag value)]

Pursuant to JIS-K7195, an amount of warpage (a heat sag value) was determined for the obtained extruded resin plate. The value after leaving the plate at 85 °C for one hour and the value after leaving the plate and at 100 °C were determined. As this value is smaller, the heat resistance is better.

### [Optical properties]

Edge faces of a test piece of the obtained extruded resin plate was polished with a polishing machine ("Pla-Beaty PB-100" manufactured by MEGAROTECHNICA CO., LTD.) and then 300 pass transmittances were determined by a spectral photometer ("U-4000" manufactured by Hitachi Ltd.) with 5 nm intervals in a wavelength range of 380 nm to 780 nm. An average transmittance (Tt) was calculated from the determined transmittance. Further, a XYZ value was determined from the transmittance in accordance with a method described in JIS Z-8722 and a yellow index was determined in accordance with a method described in JIS K-7105. As the yellow index is closer to zero, the coloring is less.

### [Impurities]

160 g of the obtained pellet-shaped methacrylic resin composition was taken to form a square plate sample of a 210 cm side and a thickness of 3.0 mm by compression molding. The obtained plate sample was observed using a strain detector ("HEIDON-13" manufactured by Shnito Scientific Co., Ltd.) and black impurities and white impurities contained in the sample were counted visually. Further, the sizes of the impurities were measured by an optical microscope of 20 times power and the number of the black impurities having an area of 0.05 mm² or more and the number of the white impurities having an area of 0.1 mm² or more were determined using a "dirt comparison chart" published by the Minting Authority of the Japan Finance Ministry.

### (Example 1)

Into a polymerization reactor equipped with a stirrer was continuously fed a mixture (monomeric components) of 97.5 parts by weight of methyl methacrylate (hereinafter abbreviated as "MMA") and 2.5 parts by weight of methyl acrylate (hereinafter abbreviated as "MA"); 0.020 parts by weight of 1,1-di(t-butylperoxy)cyclohexane as a polymerization initiator; 0.15 parts by weight of n-octylmercaptan as a chain transfer agent; 0.001 parts by weight of di-tert-dodecyl disulfide as a thermal stabilizing agent, while a reaction fluid was discharged continuously, so that the polymerization proceeded at 175 °C with an average residence time of 33 minutes. Next, the reaction fluid (a partially copolymerized material) which was taken out from the polymerization reactor was transferred to a devolatizing extruder. While unreacted monomeric components were recovered by vaporization, stearic alcohol as a release agent was added thereto at an amount which corresponded to 0.035% by weight (0.035 parts by weight) with respect to the total amount of the resin composition finally obtained. After the materials were sufficiently kneaded, the methacrylic resin composition was shaped into pellets. The rate of polymerization calculated from the production amount of the obtained methacrylic resin composition was 56%. The compositional ratio of the copolymer, the reduced viscosity, the MFR, and the impurities were determined for the obtained pellet-shaped methacrylic resin composition. The results are shown in Table 1.

The obtained pellet-shaped methacrylic resin composition was melt-kneaded at 250 °C to 260 °C using a single screw extruder and extruded from a T-die. The extruded molten resin was shaped and cooled by being brought in between a first cooling roll and a second cooling roll with bank formed, the rolls being metal rolls which were mirror-finished by plating. Further, the resin composition was wrapped over a latter-stage cooling roll and then conveyed on a transportation roller table so that it was cooled and completely solidified keeping its flat state thereof. Subsequently, the resin composition was taken off by a pair of take-off rolls and then masking films are attached to the both surfaces thereof to give an extruded resin plate. The extruded resin plate was cut and a thickness thereof was determined using a micrometer. It was 4.0 mm. The Vicat softening temperature, the heat sag value and the optical properties were evaluated for the obtained extruded resin plate. The results are shown in Table 1.

### (Comparative Example 1)

Into a polymerization reactor equipped with a stirrer was continuously fed a mixture (monomeric components) of 94.7 parts by weight of MMA and 5.3 parts by weight of MA; 0.017 parts by weight of 1,1-di(t-butylperoxy)cyclohexane as a polymerization initiator; 0.10 parts by weight of n-octylmercaptan as a chain transfer agent; 0.001 parts by weight of di-tert-dodecyl disulfide as a thermal stabilizer, while a reaction fluid was discharged continuously, so that the polymerization proceeded at 175 °C with an average residence time of 33 minutes. Next, the reaction fluid (a partially copolymerized material) which was taken out from the polymerization reactor was transferred to a devolatizing extruder. While unreacted monomeric components were recovered by vaporization, stearic alcohol as a release agent was added thereto at an amount which corresponded to 0.05% by weight (0.05 parts by weight) with respect to the total amount of the resin composition finally obtained. After the materials were sufficiently kneaded, the methacrylic resin composition was shaped into pellets. The rate of polymerization calculated from the production amount of the obtained methacrylic resin composition was 56%. The compositional ratio of the copolymer, the reduced viscosity, the MFR, and the impurities were determined for the obtained pellet-shaped methacrylic resin composition. The results are shown in Table 1.

The obtained pellet-shaped methacrylic resin composition was melt-kneaded at 250 °C to 260 °C using a single screw extruder and extruded from a T-die. The extruded molten resin was shaped and cooled by being brought in between a first cooling roll and a second cooling roll with bank formed, the rolls being metal rolls which were mirror-finished by plating. Further, the resin composition was wrapped over a latter-stage cooling roll and then conveyed on a transportation roller table so that it was cooled and completely solidified keeping the flat state thereof. Subsequently, the resin composition was taken off by a pair of take-off rolls and then masking films are attached to the both surfaces thereof to give an extruded resin plate. The extruded resin plate was cut and a thickness thereof was determined. It was 4.0 mm. The Vicat softening temperature, the heat sag value and the optical properties were evaluated for the obtained extruded resin plate. The results are shown in Table 1.

### (Comparative Example 2)

A commercially available liquid crystal TV equipped with LED light source (UN40B6000 grade) manufactured by Samsung was disassembled and the light guide panel which was installed inside the TV was taken out. The properties (the compositional ratio of the copolymer, the reduced viscosity, the MFR, the Vicat softening temperature, the heat sag value and the optical properties) were evaluated. The compositional ratio of the copolymer and the reduced viscosity were evaluated using the shredded pieces of the light guide panel. The results are shown in Table 1. Since the guide panel was not dissolved in chloroform at the predetermined concentration, the reduced viscosity thereof was judged as being greater than 80 cm³/g. Further, the molecular weight of the guide panel was too high to determine the MFR.

### (Comparative Example 3)

A commercially available liquid crystal TV equipped with LED light source (BRAVIA KDL-40ZX1) manufactured by Sony Corporation was disassembled and the light guide panel which was installed inside the TV was taken out. The properties (the compositional ratio of the copolymer, the reduced viscosity, the MFR, the Vicat softening temperature, the heat sag value and the optical properties) were evaluated. The compositional ratio of the copolymer and the reduced viscosity were evaluated using the shredded pieces of the light guide panel. The results are shown in Table 1.

**Table 1**

| | | Example 1 | Comp. Ex.1 | Comp. Ex. 2 | Comp. Ex. 3 |
|---|---|---|---|---|---|
| Compositional Ratio (wt%) | MMA | 96.9 | 93.2 | 97.5 | 92.9 |
| | MA | 3.1 | 6.8 | 0 | 7.1 |
| | BA | 0 | 0 | 2.5 | 0 |
| Reduced Viscosity (cm ³/g) | | 71 | 82 | - ^{*1)} | 85 |
| MFR (g/10min) | | 2.3 | 1.7 | - ^{*2} | 1.4 |
| Plate Thickness (mm) | | 4.0 | 4.0 | 4.0 | 4.0 |
| Vicat Softening Temp. (ºC) | | 107.5 | 103.5 | 103.8 | 99.9 |
| Heat Sag Value (mm) | 85 °C | 0 | 0.50 | 0.25 | 0.50 |
| | 100 °C | 0.75 | 2.75 | 1.25 | 4.75 |
| Optical Properties | Tt (%) | 85.5 | 86.0 | 63.9 | 80.4 |
| | YI(-) | 2.4 | 2.2 | 0.0 | 4.1 |
| Impurities | Black | None | None | - | - |
| | White | None | None | - | - |

| | | | | | |
|---|---|---|---|---|---|
| MMA: Methyl methacrylate MA: Methyl acrylate BA: n-Butyl acrylate *1): Not determined because of insolubility in chloroform *2): Not determined because of high molecular weight | | | | | |

### DESCRIPTION OF SYMBOLS

- 1:: Die
- 2:: Extruder
- P, P1, P2, P3, P4, Pr, Pt:: Methacrylic resin
- R1:: First cooling roll
- R2:: Second cooling roll
- R3:: Later-stage cooling roll
- R4:: Later-stage cooling roll
- R5:: Guide roll
- Rt:: Transportation roll
- Tr:: Roller table
- N1, N2:: Take-off roll
- A:: Extruded resin plate

## Claims

1. A methacrylic resin composition for an extruded light guide panel, wherein:
(I) the composition comprises a copolymer of methyl methacrylate and an acrylic acid ester;
(II) the ratio of methyl methacrylate units in the copolymer as determined by an analysis with pyrolysis gas chromatography is 96% by weight or more; and
(III) the reduced viscosity determined at 25 °C as a chloroform solution of the composition with a concentration of 0.01 g/cm³ is from 60 cm³/g to 80 cm³/g.

2. The methacrylic resin composition according to claim 1, wherein the ratio of the acrylic acid ester units in the copolymer as determined by the analysis with pyrolysis gas chromatography is 0.1% by weight or more.

3. The methacrylic resin composition according to claim 1 or 2, wherein the acrylic acid ester is methyl acrylate.

4. The methacrylic resin composition according to any one of claims 1 to 3, wherein the MFR determined at 230 °C under a load of 37.3 N is in a range of 0.5 g/10min to 7 g/10min.

5. The methacrylic resin composition according to any one of claims 1 to 4, wherein the copolymer is obtainable by subjecting methyl methacrylate and the acrylic acid ester to a continuous bulk polymerization or a continuous solution polymerization.

6. The methacrylic resin composition according to any one of claims 1 to 5, which comprises a release agent in an amount of from 0.01% by weight to 0.1% by weight relative to the total amount of the methacrylic resin composition.

7. A light guide panel which is formed of the methacrylic resin composition according to any one of claims 1 to 6.

8. The light guide panel according to claim 7, which is used in a liquid crystal display equipped with an LED light source.

9. A method for producing a light guide panel wherein the methacrylic resin composition according to any one of claims 1 to 6 is formed by extrusion.

10. A liquid crystal display equipped with an LED light source and comprising a light guide panel according to claim 7.
